# EUROPEAN PATENT APPLICATION

(11) **EP 1 727 387 A2**
(43) Date of publication of application: **29.11.2006**
(21) Application number: 06090084.2
(22) Date of filing: 23.05.2006
(51) Int. Cl.: H04Q 7/38, H04L 12/18

(54) **Method and equipment for indicating an mbms assignment via common control channel**

(30) Priority: 23.05.2005 US 684012 P; 24.05.2005 US 684318 P
(71) Applicant: Nokia Corporation, 02150 Espoo (FI)
(72) Inventor: Kangas, Antti O., Oulunsalo 90460 (FI); Vaittinen, Rami, Littoinen 20660 (FI)
(74) Representative: Eisenführ, Speiser & Partner

(57) **Abstract**

Method and equipment by which a radio access network signals to a mobile station an MBMS assignment, useful especially in GERAN in case of a cell not having a PCCCH. Also, method and equipment for a user equipment terminal for responding to such a signal. An immediate assignment message indicates a single block or multiple-block packet downlink conveying the MBMS assignment.

## Description

### CROSS REFERENCE To RELATED APPLICATION

Reference is made to and priority claimed from U.S. provisional application Ser. No. 60/684,012 filed May 23, 2005.

Reference is also made to and priority claimed from U.S. provisional application Ser. No. 60/684,318 filed May 24, 2005.

### BACKGROUND OF THE INVENTION

### 1. Technical Field

The present invention pertains to the field of cellular communication. More particularly, the present invention pertains to wireless transmission of point-to-multipoint data (e.g. MBMS data) over GSM/EDGE Radio Access Network (GERAN). Even more particularly, a method is provided in connection with sending to mobile stations an RLC/MAC control message (RLC/MAC control *message* can be segmented into several RLC/MAC control *blocks)* related to receiving an MBMS transmission when the mobile stations are camping on a cell, and especially in case of there not being a PCCCH allocated for the cell.

### 2. Discussion of related art

MBMS (Multimedia Broadcast/ Multimedia Service) is a unidirectional point-to-multipoint (P-t-M) multicast/broadcast bearer service in which data is transmitted from a single source entity to a group of users in a specific area. It may comprise a selection of unidirectional point-to-multipoint and bi-directional point-to-point transmissions of multimedia data (e.g. text, audio, picture, video) from a single source entity to a multiplicity of users in a service area. "Service area" for a given MBMS service is hereafter to be understood as the geographical area (i.e. set of cells) where the service is made available. The aim of MBMS is therefore to allow the provision of multiple instances of a point-to-point (P-t-P) service in a service area with a single transmission over the radio interface as radio multicast. See 3GPP TS 23.246, "Multimedia Broadcast/Multicast Service (MBMS); Architecture and Functional Description."

MBMS has two modes: Broadcast mode and Multicast mode. The main difference between the two modes is that in Broadcast mode all MBMS users in the service area are targeted, whereas in Multicast mode it is possible to address only a subset of the MBMS users in the area. Typically, the multicast mode requires the user to subscribe to a multicast group, before receiving the service. See again 3GPP TS 23.246.

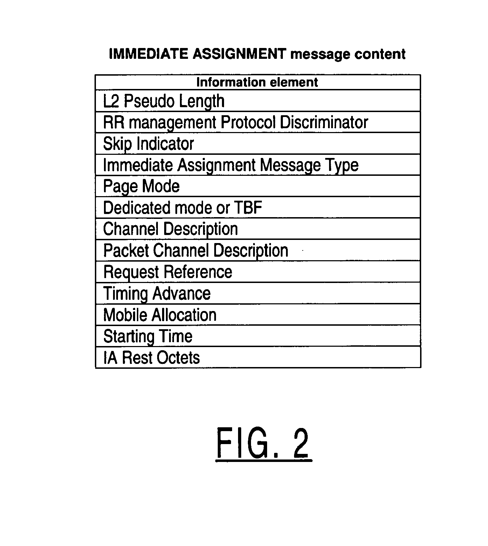

The reception of an MBMS multicast service by a mobile station (or other user equipment (UE) terminal) is enabled by certain procedures. These are (as indicated in Figure 2 of 3GPP TS 23.246 v6.6.0 (2005-03)): subscription, service announcement, joining, session start, MBMS notification, data transfer, session stop, and leaving.

### Assignment of MBMS packet resources on CCCH (prior art)

In 3GPP TS 44.060, "Radio Link Control/Medium Access Control (RLC/MAC) Protocol," it is specified that the MBMS ASSIGNMENT message (either a distribution message used for assigning resources to a single mobile station, or a non-distribution message used for assigning resources to several mobile stations) is sent on Common Control Channel (CCCH) or Packet Common Control Channel (PCCCH), and the assignment message is used to assign the radio bearer resources for an MBMS session or to notify the mobile station(s) that a radio bearer for that MBMS session is not established in the cell. However, due to legacy reasons (i.e. because of how the state-of-the-art evolved over time), new RLC/MAC control messages cannot be introduced on CCCH since the behavior of a legacy mobile station at the reception of such a message is unpredictable (i.e. the behavior is unspecified, and so is not known).

In view of this difficulty when PCCCH is not supported in the cell, it has been proposed at a 3GPP TSG GERAN WG2 standardization meeting in Quebec, Canada, May 23-27, 2005, in document G2-050217, "CR 44.018 Align the MBMS assignment message to CCCH message format when sent on CCCH," (available over the Internet at 3gpp.org/ftp/tsg_geran/Wg2_Protocol_Aspects/ GERAN2_24bis_Quebec/Docs/G2-050217.zip) that when PCCCH is not supported in the cell the IMMEDIATE ASSIGNMENT message specified in 3GPP TS 44.018, "Radio Resource Control (RRC) protocol," with an unused code point in the Immediate Assignment (IA) Rest Octets Information Element (IE), be used to assign MBMS resources by including MBMS assignment IE carrying the contents of the MBMS ASSIGNMENT message (specified in 3GPP TS 44.060, "Radio Link Control/Medium Access Control (RLC/MAC) protocol").

However, this proposal has one significant problem, namely that the maximum size of the IA Rest Octets IE is 11 octets in the IMMEDIATE ASSIGNMENT message as opposed to over 20 octets for the case when PCCCH is allocated. In practice this 11-octets limitation will make it impossible to give all the necessary MBMS bearer parameters in the message, which renders MBMS unusable, or severely limits the parameterization possibilities of the MBMS bearers.

### DISCLOSURE OF INVENTION

In a first aspect of the invention, a method is provided, comprising: preparing one or more packets for downlink of a point-to-multipoint assignment providing an assignment of resources for a point-to-multipoint transmission; preparing an immediate assignment message indicating timing of the packet downlink on a packet data channel, and providing the immediate assignment for transmission over a common control channel; wherein the immediate assignment message includes an indication that the packet downlink conveys the point-to-multipoint assignment.

A method according to the first aspect of the invention is typically performed by an element of a protocol stack (implemented in hardware or software) with a component of a radio access network, such as a base station or a base station controller.

In a second aspect of the invention, a corresponding method typically of use by an element of a protocol stack of a mobile station (or other user equipment/ wireless terminal) is provided.

Finally, the invention provides equipment and computer program products corresponding to the first and second aspect of the invention.

### BRIEF DESCRIPTION OF THE DRAWINGS

The above and other objects, features and advantages of the invention will become apparent from a consideration of the subsequent detailed description presented in connection with accompanying drawings, in which:
Figure 1 shows an immediate assignment (IA) message signaled on a CCCH from a base transceiver station of a radio access network to a mobile station, and indicating a (single block or multiple block) packet downlink assignment, followed by an MBMS assignment on a PDCH for transfer of an RLC/MAC control message, according to the invention.
Figure 2 shows a Table from 3GPP TS 44.018 showing the IA message content.
Figure 3 shows a a portion of an *IA Rest Octets* information element (IE) according to an embodiment of the invention, coded according to the syntax specified in the figure (using well-known symbology for indicating syntax).
Figure 4 is a block diagram/ flow diagram corresponding to Figure 1, but providing wider context.
Figure 5 is a flowchart showing operation of a base station transceiver or a base station controller.
Figure 6 is a flowchart showing operation of a mobile station.
Figure 7 is a block diagram illustrating a protocol stack in a base station and in a radio access network.

### BEST MODE FOR CARRYING OUT THE INVENTION

The invention is described here in the context of MBMS provided in an implementation of GERAN. In particular, the context is one in which a base transceiver station (BTS) of a base station system (BSS) of the GERAN implementation must provide an MBMS assignment (which is an RLC/MAC control message) to one or more mobile stations, but the BTS has no PCCCH allocated to the cell (which would normally be used to provide an MBMS assignment).

There are two kinds of MBMS assignments: distribution (for more than one mobile), and non-distribution (for a single mobile). According to some embodiments of the invention, both use a packet downlink assignment procedure, as specified e.g. in 3GPP TS 44.018, "Technical Specification Group GSM/EDGE Radio Access Network; Mobile radio interface layer 3 specification; Radio Resource Control (RRC) protocol" in the sub-clause 3.5.3.2 ("Sending an RLC/MAC control message:
single block packet downlink assignment procedure") or 3.5.3.2a ("Sending an RLC/MAC control message: multiple blocks packet downlink assignment procedure").

In general, the packet downlink assignment procedure uses the CCCH, in case of there being no PCCCH for a cell, to assign one or more downlink blocks on a PDCH (Packet Data Channel, used in GPRS to represent a timeslot given over to the control of GPRS rather than conventional GSM circuit switching, and so useable for carrying either signalling or user data) for the transfer of an RLC/MAC control message from the GERAN to a mobile station when the mobile is in packet idle mode.

### Indicating on CCCH a Non-Distribution MBMS Assignment on PDCH

In case of needing to provide a non-distribution MBMS assignment (i.e. to a single mobile station) when there is no PCCCH in the cell, according to some embodiments of the invention a single block packet downlink assignment procedure is used. By this, the mobile station is informed that a single downlink block on a PDCH conveys an MBMS assignment for the mobile. The network (i.e. the BTS of the radio access network component of the overall network) sends to the mobile a first IMMEDIATE ASSIGNMENT message on CCCH indicating a single block packet downlink assignment. Upon receipt of an IMMEDIATE ASSIGNMENT message, the mobile station switches to the assigned PDCH and attempts to decode the RLC/MAC control message in the assigned downlink block. In this case the RLC/MAC control message is the non-distribution MBMS ASSIGNMENT message (specified in the above-mentioned 3GPP TS 44.060, "Radio Link Control/Medium Access Control (RLC/MAC) protocol") in the assigned downlink block. When receiving an IMMEDIATE ASSIGNMENT message with content as per this embodiment or the other embodiments of the invention, legacy terminals will discard the message since the contents would be unknown/"reserved" in the IA Rest Octets part of the message. *Indicating on CCCH* a *Distribution MBMS Assignment on PDCH*

In the distribution case, in accord with at least some embodiments of the invention, a single block packet downlink assignment procedure is again used (or a multiple blocks packet downlink assignment procedure can of course instead be used), but with some differences from that used in case of a non-distribution MBMS assignment. A first difference is in the coding of the so-called TLLI (temporary logical link identifier) parameter included in the IMMEDIATE ASSIGNMENT message. The TLLI provides a signalling address for communication between a MS (Mobile Station) and a SGSN (Serving GPRS Support Node); three main types of TLLI exist:
Local TLLI - used under normal operation between the mobile and the serving SGSN; Foreign TLLI - may be used when crossing a RA (Routing Area) boundary; and Random TLLI - used for initial access, or when the mobile does not posses one of the above. According to these embodiments of the invention, either the TLLI parameter value can be set to 0xFFFF (i.e. all bits set to value '1' which is an invalid TLLI--the TLLI parameter is specified in 3GPP TS 23.003, "Numbering, addressing and identification"), or a new coding for the TLLI parameter (not already prescribed by standard, but ultimately prescribed) can be used in the IMMEDIATE ASSIGNMENT message. In case of using either the invalid TLLI or a new TLLI not already standardized, all non-MBMS capable mobile stations would disregard the IMMEDIATE ASSIGNMENT message assigning a (single or multiple block) packet downlink allocation (because the TLLI would not match one assigned to any mobile station). In contrast, MBMS mobile stations would unambiguously know that the message is meant for them.

The second (optional) difference in these embodiments is to add to the IMMEDIATE ASSIGNMENT message a single bit indicating that the single block or multiple blocks packet downlink assignment procedure is being used to send a distribution MBMS assignment message. Such a single-bit indicator is called here an MBMS_ASSIGNMENT_INDICATOR (MAI) bit. With an MAI indicator bit, the same point-to-multipoint (i.e. for several mobiles) method of sending an RLC/MAC control block can be extended also for other uses, not just for indicating that the IMMEDIATE ASSIGNMENT is being used to signal that an MBMS ASSIGNMENT is being conveyed on a block on PDCH. The use of the single-bit indicator, though, is optional. Moreover, in some embodiments, at least for embodiments after sufficient time is passed that legacy phones are not an issue, the single-bit indicator can be used to indicate that the single block packet downlink assignment procedure is being used to send a distribution MBMS assignment message, and the TLLI need not be either 0xFFF or an invalid value.

Note that one or more PCCCH's always go hand in hand with PBCCH (packet broadcast control channel). The invention is related to the case when there are no PCCCH(s)/ PBCCH allocated in the cell. If one or more PCCCH(s)/ PBCCH are allocated, then the network can send on PCCCH an MBMS ASSIGNMENT message without using the invention, i.e. without an intermediate step of sending an IMMEDIATE ASSIGNMENT, as described here.

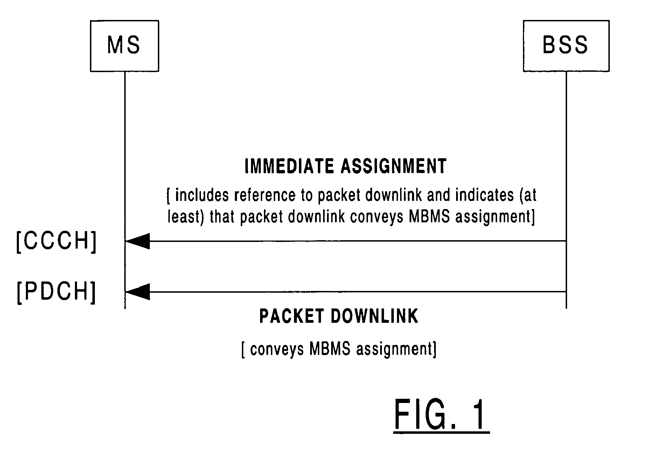

Figure 1 illustrates an embodiment of the invention in which a BTS signals on CCCH an immediate assignment to a single block packet downlink on PDCH that conveys the MBMS assignment, with the TLLI parameter of the immediate assignment provided according to the single block packet downlink assignment procedure set to the invalid value OxFFF or to a new value, and with an MAI bit included in the immediate assignment message and set to the value 1, to indicate that the single block packet downlink assignment procedure is being used to send on PDCH a (distribution) MBMS assignment message.

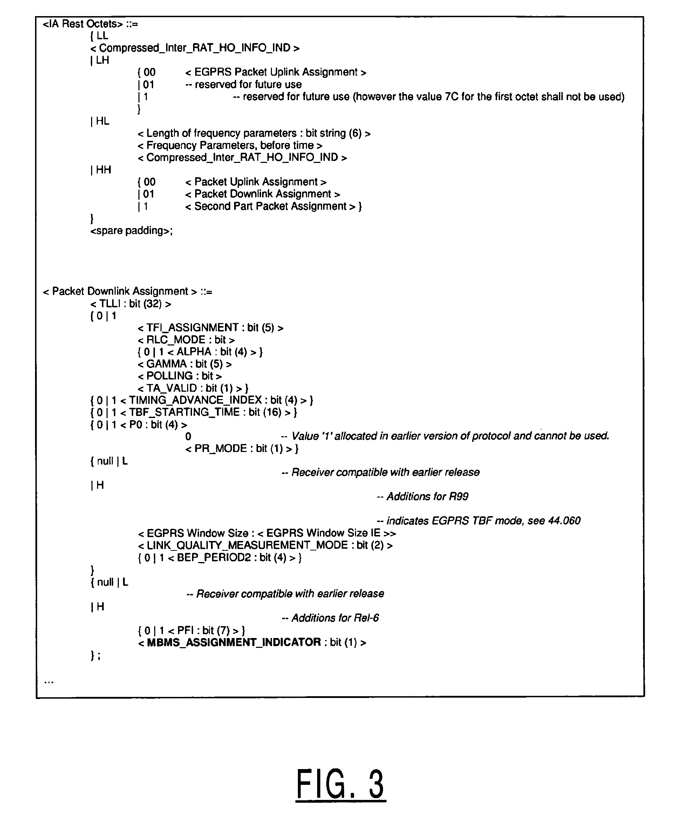

Also, in more detail below in connection with Figure 2, the required changes to the IA Rest Octets IE (shown in Figure 3). Optionally, instead of a single bit indicator, the MBMS service could be identified, making it possible for mobile stations not subscribed to this explicit MBMS service to not react to the single block assignment. In this case, though, due to lack of space in the IA Rest Octets IE, only the 24-bit MBMS SERVICE ID can be included in the message. However, even with this restriction, a vast majority of "false reactions" could be eliminated.

Figure 2 shows the IMMEDIATE ASSIGNMENT (IA) message content including an *IA Rest* Octets IE, according to the prior art and also as used by the invention, i.e. the IA message is shown in Figure 2 at a high enough level that the IA of the invention appears the same as the IA of the prior art, but the invention uses a different TLLI value than the prior art, and the IA Rest Octets is used differently by the invention. According to the prior art, the *IA Rest* Octets IE contains spare bits and possibly either a *packet uplink assignment* construction, a *packet downlink assignment* construction, or other constructions. The IA Rest Octets IE contains a TLLI value, which according to the above-described embodiment could be either the invalid value 0xFFFF or would be a new (standardized) value. Further, the IA Rest Octets IE could contain the MAI bit.

Figure 3 shows an *IA Rest Octets* IE according to at least some embodiments of the invention, and so including a single-bit MAI (MBMS assignment indicator) value, not provided by the prior art.

### Alternative for Indicating on CCCH a Distribution MBMS Assignment on PDCH

In some embodiments of the invention, instead of using the TLLI/ MAI scheme above to indicate on CCCH that a distribution MBMS assignment is conveyed in a (single block or multiple block) packet downlink on PDCH, the "reserved for future use" field in the IA Rest Octets IE is used, and in this field the network indicates the following information, in order to provide a packet downlink assignment for several (MBMS) mobile stations:
starting time, denoting the instant in time in which the MBMS Assignment message is transmitted to the mobile station(s) on PDCH, in a single or multiple block packet downlink; and
the TMGI (Temporary Mobile Group Identity), for identifying the particular MBMS service for which the MBMS Assignment message is to be sent in the allocated single or multiple block packet downlink assignment.

The TMGI makes it possible for MBMS-capable mobile stations to ignore the IMMEDIATE ASSIGNMENT message if the particular MBMS service is either not of interest to the mobile station user, or the mobile station user is not a subscriber to the particular MBMS service.

In order to make it possible to re-use this alternative in the future for purposes other than MBMS, the TMGI field is included.

Thus, according to such embodiments, the distribution single block (or multiple blocks) packet downlink assignment construction is included in the IMMEDIATE ASSIGNMENT message as in the other embodiments, but in addition, the network indicates in the distribution single block/ multiple blocks packet downlink assignment part of the IA that the distribution message is sent to indicate an MBMS assignment (via a single block or multiple blocks packet downlink), with the indication given by including the TMGI field in the distribution single block packet downlink assignment construction.

A benefit of this approach is that the TMGI field can be fully incorporated in the IA Rest Octets IE of the IMMEDIATE ASSIGNMENT message.

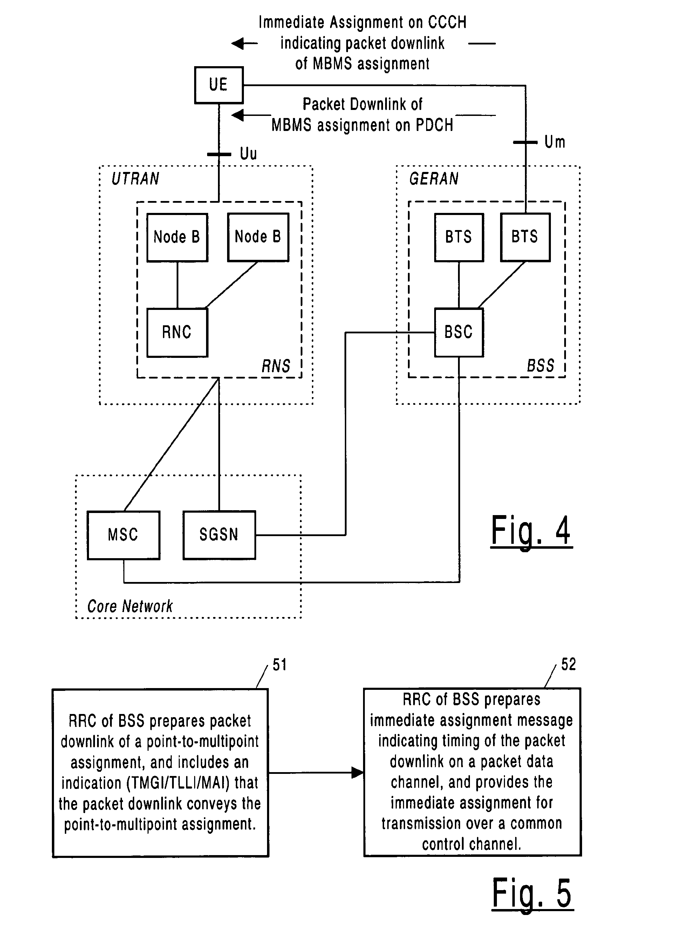

Referring now to Fig. 4, a base transceiver station (BTS) is shown signaling a UE/ mobile station (MS), according to the invention, providing an immediate assignment (via CCCH) indicating an MBMS assignment (for a plurality of UEs) is being communicated in a packet downlink (on PDCH). The BTS can provide such signaling under the control of the base station controller (BSC), or even under the control of one or another element of the core network. The BSC and the BTS along with possibly other BTSs make up a base station system (BSS). A single GERAN implementation typically includes a plurality of such base station systems. The BSS is shown in Fig. 4 as communicatively coupled to the core network, including a serving group support node (SGSN) functioning as a gateway to the rest of the core network (not shown).

As is usual for preparing an immediate assignment, the immediate assignment according to the invention is prepared by the radio resource control (RRC) layer of the GERAN or UMTS protocol stack, which is a layer 3 (Network Layer) of the protocol stack, and can be located in the BTS or in the BSC in GERAN, or in the Node B or RNC of UMTS. (The RRC is a well-known element of the protocol stack for wireless communication, and is e.g. described in 3GPP TS 25.331.)

The RRC prepares the IA and provides it to the RLC layer (or the next lower layer, depending on the specifics of the protocol stack). Ultimately, it is provided to the physical layer, which transmits it over the air interface (on CCCH in case of GERAN), where it is received by one or more mobile stations. The same holds for the single or multiple block packet conveying the MBMS assignment, i.e. it is prepared by the RRC layer, and then provided to lower layers for delivery (on PDCH in case of GERAN) to mobile stations communicatively coupled to the radio access network (GERAN or UTRAN).

Referring now to Fig. 5, according to some embodiments of the invention the RRC (or other appropriate element of a protocol stack of GERAN or UTRAN) in a first step 51 prepares one or more packets for downlink of a "point-to-multipoint assignment," i.e. an assignment of resources for a point-to-multipoint transmission, such as an MBMS assignment for an MBMS transmission. In a next step 52, the RRC prepares an immediate assignment message indicating the timing of the packet downlink on a packet data channel (e.g. the PDCH of GERAN) and includes an indication that the packet downlink conveys the point-to-multipoint assignment, and provides the immediate assignment to a lower layer of the protocol stack for transmission over a common control channel (e.g. the CCCH of GERAN) .

The invention also provides a mobile station of other user equipment terminal configured to process the signaling described above as provided by the radio access network.
Thus, in some embodiments, the invention provides a UE responsive to an immediate assignment (IA) of a packet downlink including an invalid or new TLLI in the rest octets portion of the IA, predetermined to indicate a distribution MBMS assignment, and to obtain from the IA the information needed to receive the packet downlink and thus obtain the MBMS assignment. In some such embodiments, the UE may refer to the single-bit indicator in the rest octets portion of the IA to determine that the information conveyed in the packet downlink is an MBMS assignment. In some other embodiments, the UE may refer to the TMGI of the rest octets component of the IA in order to determine the particular service being provided, and so determine whether to read the packet downlink and so obtain the MBMS assignment.

The components of the UE in which the invention would be provided are, advantageously, the protocol layers in the UE that are peer to the RRC in the radio access network, although other components/ protocol layers can be used to provide such functionality.

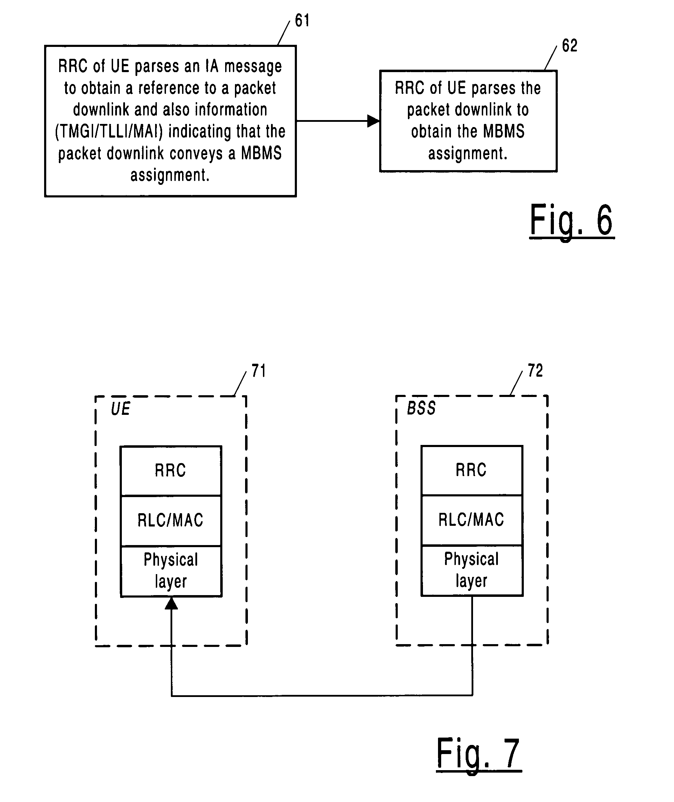

Referring now to Figure 6, a flowchart is shown for operation of a UE according to some embodiments of the invention, having a first step 61 in which the RRC of the UE parses an IA message to obtain a reference to a (single block or multiple block) packet downlink and also information (the TMGI on the one hand, or the above-described predetermined values of TLLI for indicating a distribution MBMS assignment and/or an MAI bit on the other) indicating that the packet downlink conveys a MBMS assignment. In a next step 62, the RRC parses the packet downlink to obtain the MBMS assignment.

Referring now to Figure 7, a UE is shown as including (at least) three protocol layers, arranged in a stack structure. Layers lower on the stack provide services to layers higher on the stack. The stack is shown as including an RRC layer, for which services are provided by an RLC/MAC layer(s), which is in turn receives services provided by a physical layer. The UE is communicatively coupled to a BSS over an air interface. (At least the physical layer in the BSS is located in the BTS, as opposed to the BSC.) The BSS includes layers that are peer to the layers of the protocol stack in the UE. Communication is peer to peer. According to some embodiments of the invention, the RRC of the BSS communicates to the RRC of the UE an IA as described above, i.e. so as to include an indication that it refers to a packet downlink conveying a MBMS assignment. According to other embodiments, other peer protocol layers can so communicate, and according to some embodiments, the RRC communicating with the RRC of the UE is situated in the BSC, and in others it is situated in the BTS.

It should be realized that although the invention is described above in the context of an improvement to an MBMS procedure situation, the core concept is applicable to other situations in wireless interfaces and not specifically limited to MBMS, and not limited to GERAN. As just one example of another use of the invention, the invention is of use in case an RLC/MAC control message segmented over more than one RLC/MAC block needs to be sent to one or more mobile stations.

The functionality described above (for both the radio access network and the UE) can be implemented as software modules stored in a non-volatile memory, and executed as needed by a processor, after copying all or part of the software into executable RAM (random access memory). Alternatively, the logic provided by such software can also be provided by an ASIC (application specific integrated circuit). In case of a software implementation, the invention can be provided as a computer program product including a computer readable storage structure embodying computer program code-- i.e. the software--thereon for execution by a computer processor.

As is well known, a mobile station, a base station, and a base station controller often include a processor and one or more of various kinds of non-volatile memory devices and also one or more of various kinds of volatile memory devices, and are often configured so that the processor loads into volatile memory the instructions stored in non-volatile memory, and then executes the instructions. Such a loading and executing of stored instructions by the processor imparts functionality according to the invention, i.e. enables the mobile station or the base station transceiver or controller to operate according to the invention.

It is to be understood that the above-described arrangements are only illustrative of the application of the principles of the present invention. Numerous modifications and alternative arrangements may be devised by those skilled in the art without departing from the scope of the present invention, and the appended claims are intended to cover such modifications and arrangements.

## Claims

1. A method, comprising:
preparing one or more packets for downlink of a point-to-multipoint assignment providing an assignment of resources for a point-to-multipoint transmission;
preparing an immediate assignment message indicating timing of the packet downlink on a packet data channel, and providing the immediate assignment for transmission over a common control channel;
wherein the immediate assignment message includes an indication that the packet downlink conveys the point-to-multipoint assignment.

2. A method as in claim 1, wherein the indication that the packet downlink conveys the point-to-multipoint assignment is provided in a rest octets portion of the immediate assignment.

3. A method as in claim 1, wherein the indication that the packet downlink conveys the point-to-multipoint assignment is provided by a single-bit indicator in a rest octets portion of the immediate assignment.

4. A method as in claim 1, wherein the point-to-multipoint assignment is a distribution-type point-to-multipoint assignment, and a temporary logical link identifier is included in a rest octets portion of the immediate assignment message and indicates either an invalid value or a value predetermined to signify communication of the point-to-multipoint assignment via the packet downlink having the timing indicated by the immediate assignment.

5. A method as in claim 1, wherein the point-to-multipoint assignment is a non-distribution-type point-to-multipoint assignment, and a temporary logical link identifier is included in a rest octets portion of the immediate assignment message to identify the recipient of the point-to-multipoint assignment via the packet downlink having the timing indicated by the immediate assignment.

6. A method as in claim 1, wherein the indication that the packet downlink conveys the point-to-multipoint assignment is provided by a temporary mobile group identity indicating the point-to-multipoint transmission for which the point-to-multipoint assignment is being communicated.

7. A method as in claim 6, wherein the temporary mobile group identity is provided in a rest octets portion of the immediate assignment.

8. A computer program product comprising a computer readable storage structure embodying computer program code thereon for execution by a computer processor, wherein said computer program code comprises instructions for performing a method according to claim 1.

9. An application specific integrated circuit provided so as to operate according to a method as in claim 1.

10. An apparatus, comprising:
a first component of a radio resource element of a wireless communication protocol stack, for preparing one or more packets for downlink of a point-to-multipoint assignment providing an assignment of resources for a point-to-multipoint transmission, and for preparing an immediate assignment message indicating timing of the packet downlink on a packet data channel; and
a second component of a radio resource element, for providing the immediate assignment for transmission over a common control channel;
wherein the immediate assignment message includes an indication that the packet downlink conveys the point-to-multipoint assignment.

11. An apparatus as in claim 10, wherein the apparatus is configured to provide the indication that the packet downlink conveys the point-to-multipoint assignment in a rest octets portion of the immediate assignment.

12. An apparatus as in claim 10, wherein the indication that the packet downlink conveys the point-to-multipoint assignment is a single-bit indicator value in a rest octets portion of the immediate assignment.

13. An apparatus as in claim 10, wherein the indication that the packet downlink conveys the point-to-multipoint assignment is a temporary logical link identifier in a rest octets portion of the immediate assignment message having either an invalid value or a value predetermined to signify communication of the point-to-multipoint assignment via the packet downlink having the timing indicated by the immediate assignment.

14. An apparatus as in claim 10, wherein the point-to-multipoint assignment is a non-distribution-type point-to-multipoint assignment, and the apparatus is configured to include a temporary logical link identifier in a rest octets portion of the immediate assignment message to identify the recipient of the point-to-multipoint assignment via the packet downlink having the timing indicated by the immediate assignment.

15. An apparatus as in claim 10, wherein the indication that the packet downlink conveys the point-to-multipoint assignment is a temporary mobile group identity value indicating the point-to-multipoint transmission for which the point-to-multipoint assignment is being communicated.

16. An apparatus as in claim 15, wherein the apparatus is configured to provide the temporary mobile group identity in a rest octets portion of the immediate assignment.

17. An apparatus, comprising:
means for preparing one or more packets for downlink of a point-to-multipoint assignment providing an assignment of resources for a point-to-multipoint transmission, and for preparing an immediate assignment message indicating timing of the packet downlink on a packet data channel; and
means for providing the immediate assignment for transmission over a common control channel;
wherein the immediate assignment message includes an indication that the packet downlink conveys the point-to-multipoint assignment.

18. An apparatus as in claim 17, wherein the apparatus is configured to provide the indication that the packet downlink conveys the point-to-multipoint assignment in a rest octets portion of the immediate assignment.

19. A base station system, comprising: a base station controller and a base station transceiver communicatively coupled to the base station controller and configured for communicatively coupling to a plurality of mobile stations, wherein the base station transceiver or the base station controller includes an apparatus as in claim 9, and further wherein the base station transceiver includes a physical layer of the wireless communication protocol stack, responsive to the immediate assignment, for preparing the immediate assignment for transmission on the common control channel over an air interface.

20. A method, comprising:
parsing an immediate assignment message received from a radio access network, to obtain a reference to a packet downlink, and to obtain information indicating that the packet downlink conveys a point-to-multipoint assignment; and
parsing the packet downlink to obtain the point-to-point multipoint assignment.

21. A method as in claim 20, wherein information indicating that the packet downlink conveys a point-to-multipoint assignment is provided by a field included in a rest octets portion of the immediate assignment message.

22. A method as in claim 20, wherein the information indicating that the packet downlink conveys a point-to-multipoint assignment is provided by an invalid temporary logical link identifier value or a temporary logical link identifier value in the immediate assignment and predetermined to correspond to a distribution-type point-to-multipoint assignment, and the method further comprises deciding to decode the packet downlink based on the temporary logical link identifier.

23. A method as in claim 20, wherein the information indicating that the packet downlink conveys a point-to-multipoint assignment is provided by a single-bit indicator used to indicate that the packet downlink conveys a point-to-multipoint assignment, and the method further comprises deciding to decode the packet downlink based on the single-bit indicator.

24. A method as in claim 20, wherein the information indicating that the packet downlink conveys a point-to-multipoint assignment is provided by a temporary mobile group identity.

25. An apparatus, comprising:
a radio resource element of a wireless communication protocol stack, for parsing an immediate assignment message received from a radio access network, to obtain a reference to a packet downlink, and to obtain information indicating that the packet downlink conveys a point-to-multipoint assignment; and for parsing the packet downlink to obtain the point-to-point multipoint assignment.

26. An apparatus as in claim 25, wherein the information indicating that the packet downlink conveys a point-to-multipoint assignment is a field included in a rest octets portion of the immediate assignment message.

27. An apparatus as in claim 25, wherein the information indicating that the packet downlink conveys a point-to-multipoint assignment is an invalid temporary logical link identifier value or a temporary logical link identifier value in the immediate assignment predetermined to correspond to a distribution-type point-to-multipoint assignment, and the apparatus is configured to decide to decode the packet downlink based on the temporary logical link identifier.

28. An apparatus as in claim 25, wherein the information indicating that the packet downlink conveys a point-to-multipoint assignment is a single-bit indicator value used to indicate that the packet downlink conveys a point-to-multipoint assignment, and the apparatus is configured to decide to decode the packet downlink based on the single-bit indicator.

29. An apparatus as in claim 25, wherein the information indicating that the packet downlink conveys a point-to-multipoint assignment is a temporary mobile group identity value.

30. An apparatus, comprising:
means for parsing an immediate assignment message received from a radio access network, to obtain a reference to a packet downlink, and to obtain information indicating that the packet downlink conveys a point-to-multipoint assignment;
and means for parsing the packet downlink to obtain the point-to-point multipoint assignment.

31. An apparatus as in claim 30, wherein the information indicating that the packet downlink conveys a point-to-multipoint assignment is a field included in a rest octets portion of the immediate assignment message.

32. A mobile station, comprising:
an apparatus as in claim 25; and
radio communication equipment, for coupling to a radio access network of a wireless communication system and for providing wireless telephone capability, and including a physical layer of the wireless communication protocol stack, responsive to the immediate assignment received over the air interface, for providing the immediate assignment to the radio resource element.

33. A system, comprising:
a plurality of mobile stations each as in claim 25; and
a base station comprising: a base station controller and a base station transceiver communicatively coupled to the base station controller and configured for communicatively coupling to the plurality of mobile stations, wherein the base station transceiver or the base station controller includes;
an apparatus comprising a radio resource element of a wireless communication protocol stack, for preparing one or more packets for downlink of a point-to-multipoint assignment providing an assignment of resources for a point-to-multipoint transmission, and for preparing an immediate assignment message indicating timing of the packet downlink on a packet data channel, and for providing the immediate assignment for transmission over a common control channel;
wherein the immediate assignment message includes an indication that the packet downlink conveys the point-to-multipoint assignment;
and further wherein the base station transceiver includes a physical layer of the wireless communication protocol stack, responsive to the immediate assignment, for preparing the immediate assignment for transmission on the common control channel over an air interface.
